# EUROPEAN PATENT SPECIFICATION

(11) **EP 2 779 875 B1**
(45) Date of publication and mention of the grant of the patent: **26.10.2016**
(21) Application number: 12849663.5
(22) Date of filing: 13.11.2012
(51) Int. Cl.: A47J 27/00

(54) **PAN HANDLE**
PFANNENGRIFF
POIGNÉE DE CASSEROLE

(30) Priority: 14.11.2011 CN 201120449395 U
(43) Date of publication of application: 24.09.2014
(73) Proprietor: Allure Home Creations Co. Inc., Boonton, NJ 07005 (US)
(72) Inventor: HO, Stanley, Boonton, NJ 07005 (US); LIN, Emmanuel, Xinyi District, Taipei (TW); KUO-CHIEH, Wang, Xinyi District, Taipei (TW)
(74) Representative: Goddar, Heinz J.
(86) International application number: PCT/US2012/000552
(87) International publication number: WO 2013/074131

(56) References cited:
- WO-A1-2010/125437
- JP-A- H09 117 379
- US-A- 5 774 937
- US-A- 5 802 960
- US-A- 5 802 960
- US-A- 6 000 100
- US-A1- 2005 241 109
- US-A1- 2005 241 109
- US-A1- 2005 241 111
- US-A1- 2006 213 033

## Description

### BACKGROUND OF THE INVENTION

The present invention pertains to a novel pan having a pan handle which enables the user to exercise greater control of the pan and to exert less labor in handling the pan, according to the first part of claim 1. US 2005/24 1109 A1 discloses such a pan.

Pans are one of the indispensable utensils for people to cook food. Regardless of pan types, people typically cook by placing food inside a pan, and then heating the food in the pan by means of a heating stove, such as a gas cook-top.

Pans typically have a pan body and a pan handle. The pan handle is disposed on the sidewall of the pan body, comprising a holding portion for a user to hold. The holding portion is designed in such a way that the user may use the handle to support the weight of the pan body and at the same time, can toss the pan body so as to turn over food inside the pan.

When the food in the pan is cooked, the user would typically use the holding portion as the axis and turn over the pan body to pour the food inside the pan body onto a plate. The pan body is often made of iron or aluminum materials or other materials with significant weight. With the added weight of the food inside the pan body, when a user is turning the pan body to pour the food, the burden on the user's wrist can be heavy, thereby making the pan difficult to control and causing possible injury with long term or over use. Accordingly, there is a need for a pan which will enable the user to exercise greater control of the pan and exert less labor in handling the pan. The pan according to the present invention achieves these objectives.

### SUMMARY OF THE INVENTION

The present invention refers to a pan comprising a pan body and a pan handle. The pan handle is disposed on the sidewall of the pan body. The pan handle comprises a holding portion for a user and a first projection portion disposed on the sidewall of the pan handle for the user's fingers to press against such that the user can move or turn the pan body angularly with the pan handle as the axis. The first projection is extendable from an original position to one or more extended positions. When the user uses a pan according to the present invention, the user may hold the pan by means of the holding portion of the pan handle and exert force by pressing the thumb against the first projection portion as a lever. As a result, the pan handle according to the present invention will enable the user to exercise greater control of the pan and to exert less labor in handling the pan.

### BRIEF DESCRIPTION OF THE DRAWINGS

Fig. 1 is a three-dimensional view of a preferred embodiment according to the present invention.
Fig. 2 is a top view of a preferred embodiment according to the present invention.
Fig. 3 is an illustration of a preferred embodiment according to the present invention.
Fig. 4 is a second illustration of a preferred embodiment according to the present invention.
Fig. 5 is a third illustration of a preferred embodiment according to the present invention.

### DETAILED DESCRIPTION OF THE PREFERRED EMBODIMENTS

Characteristics and functions of the present invention will be described below in detail with reference to the accompanying drawings and embodiments such that the technology and structure of the present invention for attaining the above objects can be understood.

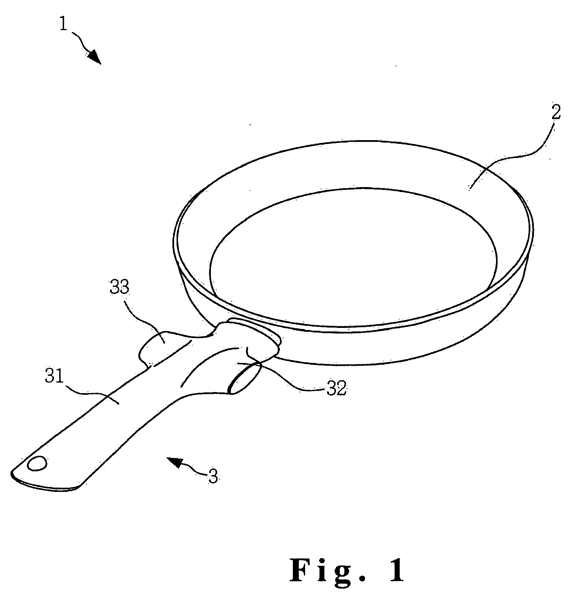

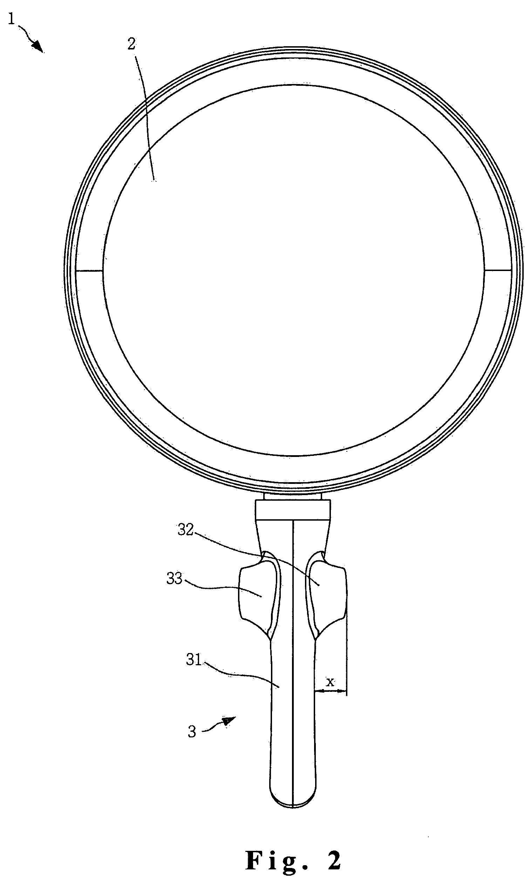

Fig. 1 and Fig. 2 are 3-dimensional view and top view of a preferred embodiment of the present invention, respectively. It can be seen from the figures that a pan 1 according to the present invention comprises a pan body 2. In this particular embodiment, the pan body 2 is a saucepan. The pan body according to the present invention, however, is not limited to a saucepan. It can be, for example, a pan with a curved bottom.

A pan handle 3 is disposed on the sidewall of said pan body 2, comprising a holding portion 31 and a first projection portion 32. The holding portion 31 is for a user to hold. The holding portion 31 is preferably formed with anti-slipping patterns such that the user holds the holding portion 31 to support the weight of the pan body 2. The first projection portion 32 is disposed on the sidewall of the pan handle 3 between the pan body 2 and the holding portion 31 for the user's fingers to press against such that the user can move or turn the pan body 2 angularly with the pan handle 3 as the axis. A preferable operation mode is to make angular movements by pressing the first projection portion 32 with the user's thumb. In the present embodiment, if the pan handle 3 is divided into two equal parts, then the first projection portion 32 is disposed on the part closer to the pan body 2.

In a preferred embodiment, a second projection portion 33 is further disposed on the sidewall of said pan handle 3 opposite to the first projection portion 32. The second projection portion 33 is disposed between the pan body 2 and the holding portion 31 for the user's index finger to press against such that the user can move or turn the pan body 2 angularly with the pan handle 3 as the axis. The second projection portion 33 is not a required component. The objectives of the present invention can be achieved without the second projection portion 33.

In a preferred embodiment, as shown in Fig. 2, there is a projection distance x between the side edge of the holding portion 31 and the side edge of the first projection portion 32, and the length of the projection distance x is between about 0.7 cm and about 10 cm; specifically, the length of the projection distance x can be between about 0.8, 1, 1.2, 1.4, 1.6, 1.8 or 2.0 cm and about 10 cm. As shown in Fig. 2, the distance x is calculated with the pan surface of the pan body 2 facing upward. Similarly, the second projection portion 33 may be disposed in the same symmetrical manner. However, it is not necessary that that the first and second projection portions 31 and 33 be disposed in a symmetrical manner. For example, the projection distance x for the first projection portion 31 does not have to be the same as the projection distance x for the second projection portion 33.

The first projection, and in a preferred embodiment also the second projection, is extendable from an original position to one or more extended positions to accommodate users with larger hands or longer fingers. The projection is extendable by, for example, a telescopic mechanism.

In a further preferred embodiment, the first and/or second projection is slidable or movable along the pan handle from an original position to one or more set positions along the handle.

In another preferred embodiment, the pan handle comprises a splash guard located between the first and/or second projection and the pan body.

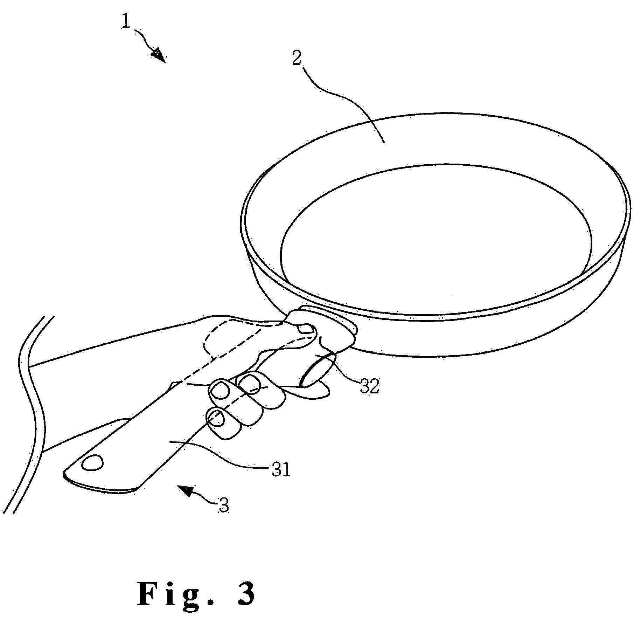

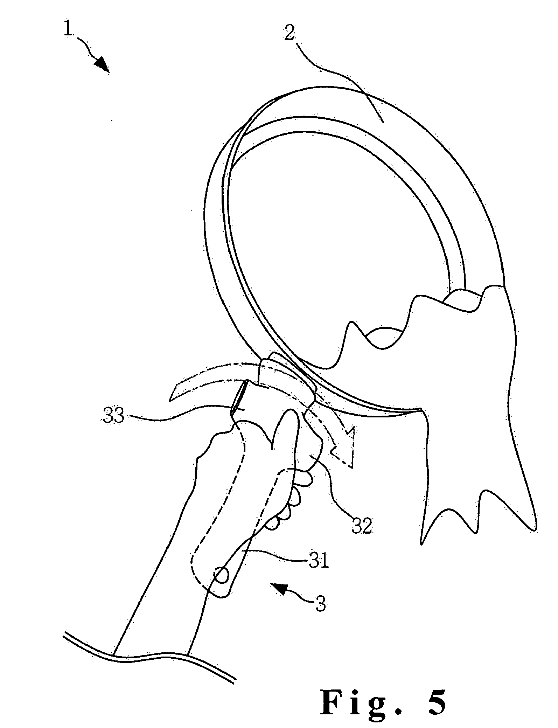

The operations of the present invention are described below with references to Fig. 3, Fig. 4 and Fig. 5. It can be seen from the figures that when a user uses the pan 1 according to the present invention, the user holds the pan 1 by means of the holding portion 31 of the pan handle 3 so as to support the weight of the pan body 2. In an embodiment, as shown in Fig. 3, the user uses the left hand to hold the holding portion 31; when the food inside the pan body 2 is cooked and the pan body 2 needs to be turned over to pour the food onto a dinner plate, the user may use the left thumb to press down the first projection portion 32 and then use the left index finger to press up the second projection portion 33. As a result, the user can easily move or turn pan body 2 angularly with the pan handle 3 as the axis.

When the user turns over the pan body 2 according to the above actions, the user uses the first projection portion 32 and the second projection portion 33 as levers to easily turn over the pan body 2. Moreover, the first projection portion 32 and the second projection portion 33 may also be disposed in ergonomic curves to facilitate the holding by thumbs and index fingers.

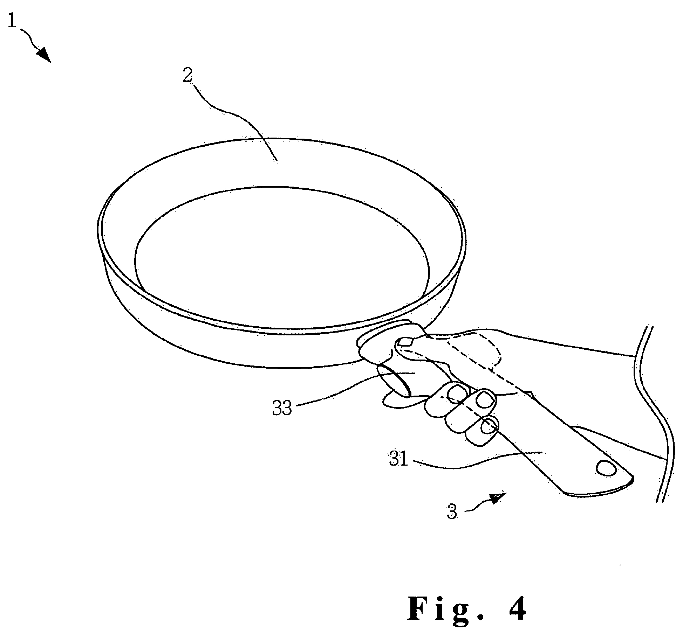

To facilitate the use by the public, moreover, as shown in Fig. 4, the present invention is not limited to left-handed or right-handed users. In case of a right-handed user, the user correspondingly uses the right thumb to press down the second projection portion 33 and then use the right index finger to press up the first projection portion 32. As a result, the user can easily move or turn the pan body 2 angularly with the pan handle 3 as the axis. Furthermore, the lengths of the first projection portion 32 and the second projection portion 33 can be specially designed. Generally, the longer the levers (the first projection portion 32 and the second projection portion 33) are, the easier the pan body 2 is made to rotate around the pan handle 3 as the axis.

Although this invention has been described with respect to specific embodiments, the details hereof are exemplary and are not to be construed as limitations.

## Claims

1. A pan (1), comprising:
a pan body (2); and
a pan handle (3) disposed on the sidewall of said pan body, comprising a holding portion (31) and a first projection portion (32) disposed on the sidewall of said pan handle (3) such that said pan body (2) can be made to move angularly with said pan handle (3) as the axis, **characterized in that** said first projection (32) is extendable from an original position to one or more extended positions.

2. The pan of claim 1, wherein said first projection portion (32) is disposed on the sidewall of the pan handle (3) between the pan body (2) and the holding portion (31).

3. The pan of claim 2, wherein said first projection portion (32) is movable to one or more set positions along the pan handle (3).

4. The pan of claim 1, wherein a second projection portion (33) is further disposed on the sidewall of said pan handle (3) opposite to the position of said first projection portion (32).

5. The pan of claim 4, wherein said second projection portion (33) is extendable from an original position to one or more extended positions.

6. The pan of claim 5, wherein said second projection portion (33) is disposed on the sidewall of the pan handle (3) between the pan (2) body and the holding portion (31).

7. The pan of claim 6, wherein said second projection portion (33) is movable to one or more set positions along the pan handle (3).

8. The pan of claim 1, wherein said pan handle (3) comprises a splash guard disposed between the pan body (2) and the first projection portion (32).

9. The pan of claim 1, wherein a projection distance (x) between the side edge of said holding portion (31) and the side edge of said first projection portion (32) is between about 0.7 cm and about 10 cm.

10. The pan of claim 5, wherein a projection distance (x) between the side edge of said holding portion (31) and the side edge of said second projection portion (33) is between about 0.7 cm and about 10 cm.

## Patentansprüche

1. Pfanne (1) umfassend:
einen Pfannenkörper (2); und
einen Pfannengriff (3), der auf der Seitenwand des genannten Pfannenkörpers angeordnet ist, umfassend einen Halteabschnitt (31) und einen ersten vorstehenden Abschnitt (32), der auf der Seitenwand des genannten Pfannengriffs (3) angeordnet ist, so dass der Pfannenkörper (2) in einer Winkelrichtung mit dem genannten Pfannengriff (3) als Achse bewegt werden kann, **dadurch gekennzeichnet, dass** der genannte erste vorstehende Abschnitt (32) von einer Ausgangsposition in eine oder mehrere ausgezogene Positionen ausgezogen werden kann.

2. Pfanne nach Anspruch 1, **dadurch gekennzeichnet, dass** der genannte erste vorstehende Abschnitt (32) auf der Seitenwand des Pfannengriffs (3) zwischen dem Pfannenkörper (2) und dem Halteabschnitt (31) angeordnet ist.

3. Pfanne nach Anspruch 2, **dadurch gekennzeichnet, dass** der genannte vorstehende Abschnitt (32) in eine oder mehrere vorgegebene Positionen entlang des Pfannengriffs (3) bewegbar ist.

4. Pfanne nach Anspruch 1, **dadurch gekennzeichnet, dass** weiterhin ein zweiter vorstehender Abschnitt (33) auf der Seitenwand des genannten Pfannengriffs (3) gegenüber der Position des ersten genannten vorstehenden Abschnitts (32) angeordnet ist.

5. Pfanne nach Anspruch 4, **dadurch gekennzeichnet, dass** der zweite vorstehende Abschnitt (33) von einer ursprünglichen Position in eine oder mehrere ausgezogene Positionen ausziehbar ist.

6. Pfanne nach Anspruch 5, **dadurch gekennzeichnet, dass** der genannte zweite vorstehende Abschnitt (33) auf der Seitenwand des Pfannengriffs (3) zwischen dem Pfannenkörper (2) und dem Halteabschnitt (31) angeordnet ist.

7. Pfanne nach Anspruch 6, **dadurch gekennzeichnet, dass** der genannte zweite vorstehende Abschnitt (33) in eine oder mehrere vorgegebene Positionen entlang des Pfannengriffs (3) bewegbar ist.

8. Pfanne nach Anspruch 1, **dadurch gekennzeichnet, dass** der genannte Pfannengriff (3) einen Spritzschutz aufweist, der zwischen dem Pfannenkörper (2) und dem ersten vorstehenden Abschnitt (32) angeordnet ist.

9. Pfanne nach Anspruch 1, **dadurch gekennzeichnet, dass** ein Abstand (x) der Auskragung zwischen dem Seitenrand des genannten Halteabschnitts (31) und dem Seitenrand des genannten ersten vorstehenden Abschnitts (32) zwischen etwa 0,7 cm und etwa 10 cm beträgt.

10. Pfanne nach Anspruch 5, **dadurch gekennzeichnet, dass** ein Abstand (x) der Auskragung zwischen dem Seitenrand des genannten Halteabschnitts (31) und dem Seitenrand des genannten zweiten vorstehenden Abschnitts (32) zwischen etwa 0,7 cm und etwa 10 cm beträgt.

## Revendications

1. Casserole (1) comportant:
un corps (2) de casserole; et
un manche (3) de casserole disposé sur la paroi latérale du corps de casserole, et comprenant une partie tenue à la main (31) et une première partie en saillie (32) disposée sur la paroi latérale du manche (3) de manière à ce que le corps (2) de casserole puisse se déplacer à un angle par rapport au manche (3) de casserole du fait que l'axe, **caractérisé en ce que** la première partie en saillie (32) est en mesure de se déployer à partir d'une position d'origine vers une ou plusieurs positions de déploiement.

2. Casserole selon la revendication 1, **caractérisée en ce que** la première partie en saillie (32) est disposée sur la paroi latérale du manche (3) de casserole entre le corps (2) de casserole et la partie tenue à la main (31).

3. Casserole selon la revendication 2, **caractérisée en ce que** la première partie en saillie (32) peut être déplacée vers une ou plusieurs positions prédéterminées le long du manche (3) de casserole.

4. Casserole selon la revendication 1, **caractérisée en ce qu'**une deuxième partie en saillie (33) est disposée par ailleurs sur la paroi latérale du manche (3) en face de la position de la première partie en saillie (32).

5. Casserole selon la revendication 4, **caractérisée en ce que** la deuxième partie en saillie (33) est en mesure de se déployer à partir d'une position d'origine vers une ou plusieurs positions de déploiement.

6. Casserole selon la revendication 5, **caractérisée en ce que** la deuxième partie en saillie (33) est disposée sur la paroi latérale du manche (3) de casserole entre le corps (2) de casserole et la partie tenue à la main (31).

7. Casserole selon la revendication 6, **caractérisée en ce que** la deuxième partie en saillie (33) peut être déplacée vers une ou plusieurs positions prédéterminées le long du manche (3) de casserole.

8. Casserole selon la revendication 1, **caractérisée en ce que** le manche (3) de casserole comprend un dispositif anti-éclaboussements disposé entre le corps (2) de casserole et la première partie en saillie (32).

9. Casserole selon la revendication 1, **caractérisée en ce que** la distance faisant saillie (x) entre le bord latéral de la partie tenue à la main (31) et le bord latéral de la première partie en saillie (32) est comprise entre 0,7 cm et 10 cm environ.

10. Casserole selon la revendication 5, **caractérisée en ce que** la distance faisant saillie (x) entre le bord latéral de la partie tenue à la main (31) et le bord latéral de la deuxième partie en saillie (33) est comprise entre 0,7 cm et 10 cm environ.
